# EUROPEAN PATENT APPLICATION

(11) **EP 4 516 103 A1**
(43) Date of publication of application: **05.03.2025**
(21) Application number: 23795356.7
(22) Date of filing: 24.04.2023
(51) Int. Cl.: A01N 57/20, A01N 43/80, A01N 25/04, A01P 13/00

(54) **DISPERSIBLE OIL-BASED SUSPENSION CONCENTRATE CONTAINING 3-(2-CHLORO-4-FLUORO-5-(3-METHYL-2,6-DIOXO-4-TRIFLUOROMETHYL-3,6-DIHYDROPYRIMIDINE-1(2H)-YL)PHENYL)-5-METHYL-4,5-DIHYDROISOXAZOLE-5-CARBOXYLIC ACID ETHYL ESTER AND PREPARATION METHOD THEREFOR**

(30) Priority: 27.04.2022 CN 202210457620
(71) Applicant: Nantong Jiangshan Agrochemical & Chemicals Co., Ltd., Nantongshi, Jiangsu 226000 (CN)
(72) Inventor: WANG, Li, Nantong, Jiangsu 226000 (CN); ZHU, Yanmei, Nantong, Jiangsu 226000 (CN); DONG, Lei, Nantong, Jiangsu 226000 (CN); ZHAO, Yong, Nantong, Jiangsu 226000 (CN); FAN, Meiyun, Nantong, Jiangsu 226000 (CN)
(74) Representative: Cabinet Chaillot
(86) International application number: PCT/CN2023/090406
(87) International publication number: WO 2023/207923

(57) **Abstract**

The present invention relates to the technical field of A01P13/00, and more specifically, the present invention relates to a dispersible oil-based suspension concentrate containing 3-(2-chloro-4-fluoro-5-(3-methyl-2,6-dioxo-4-trifluoromethyl-3,6-dihydropyrimidine-1(2H)-yl)phenyl)-5-methyl-4,5-dihydroisoxazole-5-carboxylic acid ethyl ester and a preparation method therefor. The dispersible oil-based suspension concentrate containing 3-(2-chloro-4-fluoro-5-(3-methyl-2,6-dioxo-4-trifluoromethyl-3,6-dihydropyrimidine-1(2H)-yl)phenyl)-5-methyl-4,5-dihydroisoxazole-5-carboxylic acid ethyl ester comprises the following components in parts by weight: 22-44 parts of glyphosate ammonium salt, 0.5-1.5 parts of 3-(2-chloro-4-fluoro-5-(3-methyl-2,6-dioxo-4-trifluoromethyl-3,6-dihydropyrimidine-1(2H)-yl)phenyl)-5-methyl-4,5-dihydroisoxazole-5-carboxylic acid ethyl ester, 3-8 parts of a wetting dispersant, 10-15 parts of an emulsifier, 1-2 parts of a structure modifier, and the balance of a solvent till 100 parts. In the present application, the dispersible oil-based suspension concentrate solves the problem in the prior art of decomposition of 3-(2-chloro-4-fluoro-5-(3-methyl-2,6-dioxo-4-trifluoromethyl-3,6-dihydropyrimidine-1(2H)-yl)phenyl)-5-methyl-4,5-dihydroisoxazole-5-carboxylic acid ethyl ester, and the dispersible oil-based suspension concentrate does not have the problem of creaming, has good high and low temperature resistance, and has good dilution stability, lasting foamability and suspensibility.

## Description

### FIELD OF TECHNOLOGY

The present invention relates to the technical field of A01P13/00, and more specifically relates to a dispersible oil suspension agent containing benzylazole, and a preparation method therefor.

### BACKGROUND

Benzylazole is compounded with glyphosate to have significant synergistic effects, thus improving the fast-acting property and persistent effect effectively. Moreover, these components can be made into dispersible oil suspensions, suspension agents, water dispersible granules, granules and other dosage forms. However, the addition of high content of glyphosate is easy to cause pipe blockage during production. Meanwhile, the dispersible oil suspension suffers the problems of livering and decomposition of original agents.

Chinese patent CN113491269A provides a herbicide composition, comprising benzylazole, glyphosate, a surfactant, a pH regulator, a structural stabilizer, a solvent and an oil base. However, there also exists the risk of livering in the scale-up experiment of production; moreover, there are a great variety of components, resulting in reduced production efficiency. Meanwhile, the raw materials and preparation method will cause the problem of pipe blockage.

Therefore, it needs to provide a dispersible oil suspension agent containing benzylazole and glyphosate, thus reducing the type of raw materials and solving problems such as livering and pipe blockage.

### SUMMARY

Directed to some of the problems existing in the prior art, in a first aspect, the present invention provides a dispersible oil suspension agent containing benzylazole, which includes the following components in part by weight: 22-44 parts of ammonium glyphosate, 0.5-1.5 parts of benzylazole, 3-8 parts of wetting dispersing agent, 10-15 parts of emulsifying agent, 1-2 parts of structure regulating agent, and solvent supplemented to 100 parts.

In one embodiment, the weight ratio of the ammonium glyphosate to benzylazole is (28-38):1, preferably, 33:1.

In one embodiment, the wetting dispersing agent is one or more of sulfonate, polycarboxylate and sulfate dispersing agents, preferably, the wetting dispersing agent is selected from one or more of TSC-930, SP-OF3498D, GY-EM05 and WELOD 461.

In one embodiment, the emulsifying agent is selected from one or more of OD21, ODE286 and TSC901.

In one embodiment, when the emulsifying agent is OD21, the wetting dispersing agent is selected from one or more of TSC-930, SP-OF3498D and GY-EM05; when the emulsifying agent is ODE286, the wetting dispersing agent is SP-OF3498D; when the emulsifying agent is TSC901, the wetting dispersing agent is SP-OF3498D.

Preferably, the weight ratio of the wetting dispersing agent to the emulsifying agent is 5:(11-14), more preferably, 5:12.

Unexpectedly, it has been found in the experiment by the applicant that specific type of emulsifying agent and wetting dispersing agent are combined in a certain ratio to obtain a dispersible oil suspension in the presence of less variety of adjuvants; the obtained dispersible oil suspension not only has better viscosity and is free of milling process and risk of livering at room temperature, but also has a reduced decomposition rate of benzylazole after thermal/cold storage, thus improving the storage life. The applicant believes that it is possibly caused by the interaction between long carbon chains in the system formed by the specific wetting dispersing agent and emulsifying agent. Moreover, the polar groups carried by the specific wetting dispersing agent and emulsifying agent enable the comb-like structure in the wetting dispersing agent to enhance the dispersion stability among molecules of the original agents, thus avoiding the escape of the benzylazole molecules under extreme conditions.

In one embodiment, the structure regulating agent is white carbon black and/or organobentonite.

Preferably, the structure regulating agent is a mixture of white carbon black and organobentonite according to a weight ratio of (1-3):1, more preferably (1-2):1.

It is found by the applicant in the experiment that in the present application, there are a small amount of solids aggregated at the bottom of the dispersible oil suspension obtained in the presence of specific adjuvants; moreover, after organobentonite is added, there is still a small amount of solid aggregated at the bottom thereof. To solve the phenomenon of solid aggregation, a person skilled in the art usually regulates the adjuvants added to improve the dispersibility of the original agents. Moreover, it is found by the applicant that there are problems such as higher oil extraction rate as well as the decomposition of benzylazole under thermal/cold storage once the specific adjuvants in the present application are regulated. Unexpectedly, it has been found by the applicant in the experiment that when the structure regulating agent is a mixture of white carbon black and organobentonite in a weight ratio of (1-2):1, the structure regulating agent is compounded with the specific wetting dispersing agent and emulsifying agent in the present application to obtain a dispersible oil suspension; the obtained dispersible oil suspension not only eliminates the problem of bottom solid aggregation, but also will not affect the oil extraction, cold and heat resistances of the dispersible oil suspension, thus avoiding the influences of the structure regulating agent on oil extraction, cold and heat resistances. Therefore, the applicant believes that the possible reason is as follows: in the presence of the specific wetting dispersing agent and emulsifying agent in the present application, a three-dimensional structure is formed in a solvent of methyl oleate by the specific weight ratio of white carbon black and organobentonite to maintain certain viscosity; moreover, there is no risk of livering.

Furthermore, it has been unexpectedly found by the applicant that the dispersible oil suspension which is obtained by the specific preparation method of the present application in combination with the specific structure regulating agent, wetting dispersing agent, and emulsifying agent in the presence of a single solvent methyl oleate, has better dilution stability and persistent foamability. The applicant believes that each of molecules is controlled within the space of the three-dimensional structure; moreover, small and large molecular chains can be combined mutually and intertwined more closely as time goes by. Therefore, the whole system keeps more stable viscosity.

Moreover, it has been further unexpectedly found by the applicant that the dispersible oil suspension obtained in the present application still has better dispersibility, permeability, wettability, adhesiveness, target adhesion, evapotranspiration resistance, spreadability and the like even without the addition of extra rapid penetrating agents, other surfactants and the like.

Solvent in the present invention is not defined particularly and can be conventionally chosen by a person skilled in the art. In a preferred embodiment, the solvent is methyl oleate.

In one embodiment, the dispersible oil suspension agent containing benzylazole further includes 5-10 parts by weight of synergist.

The synergist in the present application may be enumerated below: anionic surfactants, for example, rapid penetrating agent T, sodium diethylhexyl sulfosuccinate, dioctyl sodium sulfosuccinate, and the like; anionic-nonionic bistructure sulphonates; nonionic surfactants, for example, fatty alcohol-polyoxyethylene ether, fatty alcohol-polyoxyethylene ether-polyoxypropylene ether, Tween, and the like; decanamides substances and the like.

The synergist trade mark in the present application may be enumerated below: 3075V, FTRT^{®}TT, FIRT^{®}TV-3, T-100, 245-LQ-(TH), L-1505-LQ-(AP), 4166, and the like.

In a second aspect, the present invention provides a method for preparing the dispersible oil suspension, including: mixing benzylazole with the wetting dispersing agent, the emulsifying agent, the structure regulating agent and the solvent to form an oil phase, adding the oil phase to a sand mill for circulation, and adding the ammonium glyphosate for milling after the circulation of the oil phase.

In one embodiment, the method for preparing the dispersible oil suspension includes: mixing benzylazole into methyl oleate and adding the remaining raw materials, and performing shearing to form a uniform oil phase; adding the oil phase after pumping 0-50°C hot water to a sand mill, and adding ammonium glyphosate for milling after normal circulation of the oil phase to obtain the dispersible oil suspension.

It has been found in the experiment by the applicant that the weight ratio of ammonium glyphosate is high in the dispersible oil suspension of the present application; during preparation, the ammonium glyphosate is easy to suffer sedimentation and caking to cause the blocking of circulating pipelines. Moreover, unexpectedly, the applicant has found that in the present application, benzylazole, specific wetting dispersing agent, emulsifying agent, structure regulating agent and solvent are mixed first, after the oil phase is circulated, ammonium glyphosate is added, thus avoiding the problem of pipe blockage caused by ammonium glyphosate; moreover, the machinability of the later milling is good and desired particle size distribution can be achieved. The applicant believes that the possible reason is as follows: after ammonium glyphosate is added to the oil phase formed in the present application, the ammonium glyphosate can be dispersed and circulated in the initial stage of addition very well by means of the fluidity of the oil phase. This avoids the pipe blockage caused by the sedimentation of local ammonium glyphosate. Moreover, the dispersible oil suspension obtained by the method of the present application has little residues remaining after pouring.

Compared with the prior art, the present invention has the following beneficial effects:

According to the present application, the dispersible oil suspension solves the problem of decomposition of benzylazole in the prior art. Moreover, the dispersible oil suspension is free of livering problem and has better high/low temperature resistance, better dilution stability, persistent foamability and suspension percentage.

### BRIEF DESCRIPTION OF THE DRAWINGS

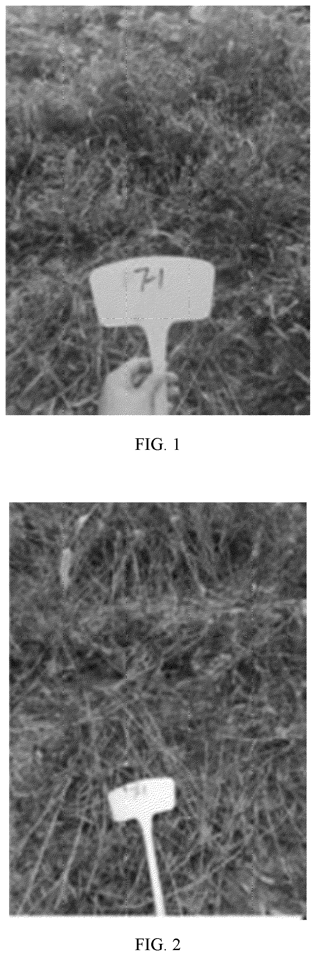

FIG. 1 is a diagram showing the weeding effect (*Ageratum conyzoides, Green Bristlegrass, Persicaria hydropiper*) of a dispersible oil suspension in Example 1 of the present application 3 days later after use;
FIG. 2 is a diagram showing the weeding effect (*Ageratum conyzoides, Green Bristlegrass, Persicaria hydropiper*) of the dispersible oil suspension in Example 1 of the present application 7 days later after use;

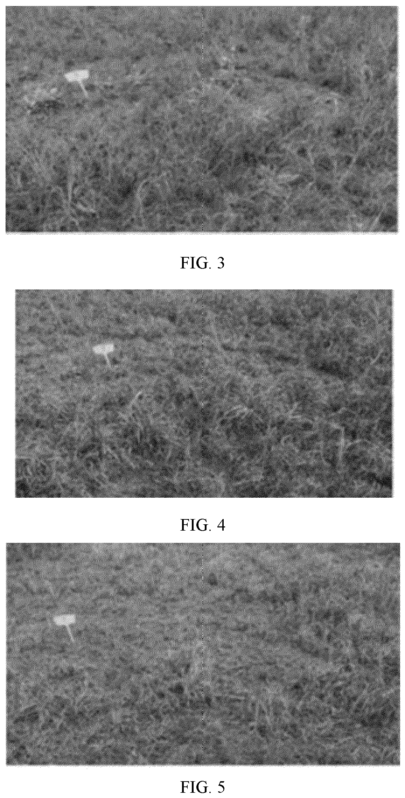

FIG. 3 is a diagram showing the weeding effect (*Eleusine indica, Green Bristlegrass, Phragmites australis, Imperata cylindrica, Digitaria sanguinalis, Artemisia argyi, Erigeron annuus, Conyza canadensis, Humulus scandens, Aster indicus, Cayratia japonica* and *Penthorum chinense Pursh*) of the dispersible oil suspension in Example 1 of the present application 3 days later after use;
FIG. 4 is a diagram showing the weeding effect (*Eleusine indica, Green Bristlegrass, Phragmites australis, Imperata cylindrica, Digitaria sanguinalis, Artemisia argyi, Erigeron annuus, Conyza canadensis, Humulus scandens, Aster indicus, Cayratia japonica* and *Penthorum chinense Pursh)* of the dispersible oil suspension in Example 1 of the present application 15 days later after use;
FIG. 5 is a diagram showing the weeding effect (*Eleusine indica, Green Bristlegrass, Phragmites australis, Imperata cylindrica, Digitaria sanguinalis, Artemisia argyi, Erigeron annuus, Conyza canadensis, Humulus scandens, Aster indicus, Cayratia japonica* and *Penthorum chinense Pursh*) of the dispersible oil suspension in Example 1 of the present application 30 days later after use.

### DESCRIPTION OF THE EMBODIMENTS

The present invention will be described by the detailed embodiments below, but not limited to the detailed examples provided here.

### Example 1

A dispersible oil suspension agent containing benzylazole specifically includes the following components in part by weight:
33 parts of ammonium glyphosate, 1 part of benzylazole, 5 parts of wetting dispersing agent TSC-930, 12 parts of emulsifying agent OD21, 1 part of white carbon black, 1 part of organobentonite, and methyl oleate supplemented to 100 parts.

Ammonium glyphosate is home-made by the company and has a purity of 96% above; benzylazole is home-made by the company and has a purity of 92% above; the wetting dispersing agent TSC-930 is purchased from TAKEMOTO; the emulsifying agent OD21 is purchased from WuXi JingFeng Technology Co., Ltd.; the white carbon black is purchased from Nantong Yelv New Material Sales Co., Ltd.; and the organobentonite is purchased from Guangxing International Trade Co., Ltd. in Zhangjiagang Free Trade Zone.

The method for preparing the dispersible oil suspension is as follows:
(1) benzylazole was dissolved into methyl oleate, and remaining raw materials were added, then the above mixed materials were sheared for 5 min at five-speed of a high speed shearing machine to form a uniform oil phase for further use.
(2) 50°C hot water was added to a horizontal sand mill, and the oil phase was added in proportion first; after normal circulation, ammonium glyphosate was added; then the materials above were milled to particle sizes below: D97 was 6.235 µm, D10 was 0.527 µm, D50 was 1.090 µm and D90 was 3.446 µm.

The dispersible oil suspension obtained in this example was tested. The test results are shown in Table 1.

**Table 1**

| Test index | | Test result | Test standard or method |
|---|---|---|---|
| Thermal storage | Content of benzylazole wt% | 0.98 | Tested in accordance with 4.10 in HG/T 2467.2-2003 |
| | Decomposition rate of benzylazole wt% | 4.85 | |
| Cold storage | Content of benzylazole wt% | 1.02 | Tested in accordance with 4.11 in HG/T 2467.2-2003 |
| | Decomposition rate of benzylazole wt% | 0.97 | |
| Pourability | Residue after pour/wt% | 2.01 | Tested in accordance with 4.9 in HG/T 2467.5-2003 |
| | Residue after wash/wt% | 0.29 | |
| Viscosity, mPa·s | | 287 | |
| Oil extraction rate | | No obvious oil extraction | |
| pH | | 3.84 | GB/T 1601-1993 |
| Water content wt% | | 0.66 | GB/T 1600-2001 |
| Dilution stability | | Qualified | GB/T 1603-2001 |
| Persistent foamability | | Qualified | Tested in accordance with 4.11 in HG/T 2467.5-2005 |

Remarks: the testing environment of the oil extraction rate is as follows: thermally stored for 14 d, stored for a long time at room temperature; no obvious oil is extracted after it is transferred from thermal storage to room temperature.

The dispersible oil suspension obtained in this example was subjected to efficacy test:

### Laboratory test is as follows:

[Test weeds] *Abutilon theophrasti, Portulaca oleracea, Eleusine indica, Digitaria sanguinalis* and *Echinochloa crusgalli*
[Test unit] Collaborative Innovation Center of Green Pesticides, Zhejiang A & F University (Chen Jie)

### [Test method]

Greenhouse potted plants were taken (at 28±5°C), stems and leaves were sprayed; 3 duplicates were set and a blank control was set additionally. The treated plants were cultured conventionally at room temperature; the reaction conditions of the plants were observed at regular time; the raw weight of the weed's overground parts was weighed 10 days later after administration, so as to calculate the raw-weight control effect; the control effect of the completely withered weed is calculated by 100%.

### [Test result]

The weeding effects of *Abutilon theophrasti, Portulaca oleracea, Eleusine indica* and *Echinochloa crusgalli* are up to 90.0% above.

Field trial is as follows:
Test 1
   [Test site] Lvjunyizhuang Farmland, Jingshan Town, Lin'an City
   [Test unit] Collaborative Innovation Center of Green Pesticides, Zhejiang A & F University (Chen Jie)
   [Test time] July 6, 2021-August 5, 2021
   [Dosage] 190 g/Mu(666.7 square metres)
   [Major weeds] *Ageratum conyzoides, Green Bristlegrass, Persicaria hydropiper*; the weeds are in ripening and fruiting period with the degree of coverage of 80-100%.
   [Test result]
   3 days later after use, the weeds show certain toxic symptoms; leaves of the weeds begin to wilt, as shown in FIG. 1; 7 days later after use, there is notable efficacy, as shown in FIG. 2.
Test 2
   [Test site] Open area of the East Plant Area, JIANGSHAN AGROCHEMICAL (completed by internal personnel of the Business Development Department)
   [Test time] August 9, 2021-September 8, 2021
   [Dosage] 180 g/Mu
   [Major weeds] *Eleusine indica, Green Bristlegrass, Phragmites australis, Imperata cylindrica, Digitaria sanguinalis, Artemisia argyi, Erigeron annuus, Conyza canadensis, Humulus scandens, Aster indicus, Cayratia japonica* and *Penthorum chinense Pursh*
   [Test result]
   3 days later after use, the weeds show certain toxic symptoms, as shown in FIG. 3; 15 days later after use, there is notable efficacy, as shown in FIG. 4; 30 days later after use, weeds are almost extirpated, as shown in FIG. 5.

### Example 2

A dispersible oil suspension agent containing benzylazole is provided, and the detailed components are the same as those in Example 1. Example 2 differs from Example 1 in that the wetting dispersing agent TSC-930 is replaced with a wetting dispersing agent SP-OF3494D which is purchased from JIANGSU SINVOCHEM S&T CO., LTD.

The dispersible oil suspension agent containing benzylazole was prepared the same as that in Example 1. Example 2 differs from Example 1 in that the wetting dispersing agent TSC-930 is replaced with a wetting dispersing agent SP-OF3494D.

### Example 3

A dispersible oil suspension agent containing benzylazole is provided, and the detailed components are the same as those in Example 1. Example 3 differs from Example 1 in 0.5 parts of organobentonite.

The dispersible oil suspension agent containing benzylazole was prepared the same as that in Example 1.

The dispersible oil suspensions in Example 2 and Example 3 are free of obvious oil extraction phenomenon.

### Example 4

A dispersible oil suspension agent containing benzylazole is provided, and the detailed components are the same as those in Example 1. Example 4 differs from Example 1 in that 5 parts of wetting dispersing agent TSC-930 and 12 parts of emulsifying agent OD21 are replaced with 17 parts of HUNTSMAN WELOD 461.

The dispersible oil suspension agent containing benzylazole was prepared the same as that in Example 1. Example 4 differs from Example 1 in that the wetting dispersing agent TSC-930 and the emulsifying agent OD21 are replaced with 461.

### Example 5

A dispersible oil suspension agent containing benzylazole is provided, and the detailed components are the same as those in Example 1. Example 5 differs from Example 1 in that the wetting dispersing agent TSC-930 is replaced with a wetting dispersing agent SP-OF3498D.

The dispersible oil suspension agent containing benzylazole was prepared the same as that in Example 1. Example 5 differs from Example 1 in that the wetting dispersing agent TSC-930 is replaced with a wetting dispersing agent SP-OF3498D, and milling in the step (2) is performed to a particle size D97 of 2.824 µm.

### Example 6

A dispersible oil suspension agent containing benzylazole is provided, and the detailed components are the same as those in Example 1. Example 6 differs from Example 1 in that the wetting dispersing agent TSC-930 is replaced with a wetting dispersing agent SP-OF3498D, and the emulsifying agent OD21 is replaced with ODE286.

The dispersible oil suspension agent containing benzylazole was prepared the same as that in Example 1. Example 6 differs from Example 1 in that the wetting dispersing agent TSC-930 is replaced with a wetting dispersing agent SP-OF3498D, and the emulsifying agent OD21 is replaced with ODE286.

### Example 7

A dispersible oil suspension agent containing benzylazole is provided, and the detailed components are the same as those in Example 1. Example 7 differs from Example 1 in that the wetting dispersing agent TSC-930 is replaced with a wetting dispersing agent SP-OF3498D, and the emulsifying agent OD21 is replaced with TSC901.

The dispersible oil suspension agent containing benzylazole was prepared the same as that in Example 1. Example 7 differs from Example 1 in that the wetting dispersing agent TSC-930 is replaced with a wetting dispersing agent 3498D, and the emulsifying agent OD21 is replaced with TSC901, and milling is performed to a particle size D97 of 2.577 µm.

### Example 8

A dispersible oil suspension agent containing benzylazole is provided, and the detailed components are the same as those in Example 1. Example 8 differs from Example 1 in that the wetting dispersing agent TSC-930 is replaced with a wetting dispersing agent GY-EM05.

The dispersible oil suspension agent containing benzylazole was prepared the same as that in Example 1. Example 8 differs from Example 1 in that the wetting dispersing agent TSC-930 is replaced with a wetting dispersing agent GY-EM05, and milling is performed to a particle size D97 of 2.458 µm.

### Example 9

A dispersible oil suspension agent containing benzylazole is provided, and the detailed components are the same as those in Example 1.

Example 9 differs from Example 1 in that the milling in the step (2) is performed to a particle size D97 of 2.787 µm.

Test results of Examples 4-9 are shown in Table 2.

**Table 2**

| No. | Viscosity mPa·s | pH value | Water content % | Granularity D97, µm | Dilution stability | Persistent foamability | Suspension percentage % |
|---|---|---|---|---|---|---|---|
| Example 4 | In the milling process of the scale-up experiment, the viscosity gradually increases to be failure of circulation, resulting in livering finally | | | | | | |
| Example 5 | 177 | 4.03 | 0.64% | 2.824 | Qualified | Qualified | Benzylazole: 99.69% |
| | | | | | | | Ammonium glyphosate: 99.81% |
| Example 6 | Viscosity in the formula is greater (greater than 700 mPa·s), there exists a risk of livering at room temperature, but it is not taken into account for the moment. | | | | | | |
| Example 7 | 606 | 3.97 | / | 2.577 | Unqualified | Qualified | / |
| Example 8 | 151 | 4.02 | / | 2.458 | Unqualified | Qualified | / |
| Example 9 | 184 | 4.05 | 0.77% | 2.787 | Qualified | Qualified | Benzylazole: 99.47% |
| | | | | | | | Glyphosate: 99.97% |

The test methods of viscosity, dilution stability and persistent foamability are the same as those in Example 1.

The test method or test standard of the suspension percentage is subjected to the following process: a sample to be tested is prepared to a proper concentration of suspension with standard hard water; the suspension is then subjected for standing for a certain time in a graduated cylinder under prescribed conditions, thus determining the content of the active ingredients in 1/10 of the suspension and precipitates at the bottom.

During the test, the dispersible oil suspensions obtained in Example 5 and Example 9 have qualified dilution stability. Moreover, the dispersibility of the dispersible oil suspension obtained in Example 9 is superior to that of the dispersible oil suspension in Example 5; the dispersible oil suspension obtained in Example 9 is dispersible in a shape of clouding.

### Examples 10-15

Examples 10-15 provide dispersible oil suspensions, and the detailed components are the same as those in Example 1. Examples 10-15 differ from Example 1 in that the content of white carbon black and organobentonite is different. Moreover, detailed embodiments in the preparation methods are the same as those in Example 1, but the difference lies in different particle size D97. See details in Table 3.

**Table 3**

| Amount (part by weight) % | | Result | | | |
|---|---|---|---|---|---|
| White carbon black | Organobentonite | Granularity (D97, µm) | Viscosity (mPa·s) | Oil extraction rate at thermal storage % | Remarks |
| 0 | 0 | 4.623 | 117 | 10% | A small amount of solids are aggregated at the bottom |
| 1 | 0 | 5.298 | 136 | 4.76 | / |
| 0 | 1 | 4.649 | 291 | 4.08 | A small amount of solids are aggregated at the bottom |
| 0.5 | 0.5 | 5.235 | 175 | 7.14 | / |
| 1 | 0.5 | 4.555 | 146 | 4.55 | / |
| 1 | 1 | 6.235 | 287 | 2.70 | / |

### Examples 16-26

Examples 16-26 provide dispersible oil suspensions, and the detailed components are the same as those in Example 1. Examples 16-26 differ from Example 1 in different types of the wetting dispersing agent and the emulsifying agent. See details in Table 4.

**Table 4 Examples 27-33**

| | Wetting dispersing agent | Emulsifying agent | Appearance | Decomposition rate 14 days later after thermal storage % | | Viscosity, mPa·s | pH value |
|---|---|---|---|---|---|---|---|
| | | | | Glyphosate | Benzylazole | | |
| Example 16 | GY-EM05 | OD21 | Good | 1.98 | No decomposition can be seen | 165 | 4.23 |
| Example 17 | | ODE286 | Poor fluidity | / | | | |
| Example 18 | | TSC901 | Poor fluidity | | | | |
| Example 19 | TSC920 | OD21 | Livering | | | | |
| Example 20 | | ODE286 | Livering | | | | |
| Example 21 | | TSC901 | Livering | | | | |
| Example 22 | TSC921 | OD21 | Poor fluidity | | | | |
| Example 23 | | ODE286 | Livering | | | | |
| Example 24 | | TSC901 | Poor fluidity | | | | |
| Example 25 | TSC930 | ODE286 | Poor fluidity | / | | | |
| Example 26 | | TSC901 | Poor fluidity | | | | |
| Example 1 | | OD21 | Good | 1 | No decomposition can be seen | 287 | 3.84 |

A dispersible oil suspension agent containing benzylazole is provided, and the detailed components are the same as those in Example 1. Examples 27-33 differ from Example 1 in different types of the wetting dispersing agents and the emulsifying agent. See details in Table 5.

Detailed embodiments in the preparation methods are the same as those in Example 1. Examples 27-33 differ from Example 1 in adding different types of wetting dispersing agents and emulsifying agents.

**Table 5**

| | Wetting dispersing agent | Emulsifying agent | Appearance | Decomposition rate 14 days later after thermal storage % | | Viscosity mPa.s | pH |
|---|---|---|---|---|---|---|---|
| | | | | Glyphosate | Benzylazole | | |
| Example 27 | SP-OF3498D | 3441 L | Livering | 2.06 | / | / | / |
| Example 28 | | OD21 | Good | 3.74 | 0.20 | 143 | 4.22 |
| Example 29 | | ODE | Poor fluidity | / | / | / | / |
| Example 30 | | ODE286 | Good | 3.88 | No decomposition can be seen | 778 | 4.23 |
| Example 31 | | ECH110 | Poor emulsibility Poor dispersibility | / | / | / | / |
| Example 32 | | ECH800 | Poor fluidity | / | / | / | / |
| Example 33 | | TSC901 | Good | 3.88 | No decomposition can be seen | 606 | 4.34 |

Examples 5 and 28 have same formula in the present application; the test results fluctuate within a reasonable range, and test results are stable.

### Examples 34-39

A dispersible oil suspension is provided, and the detailed components are the same as those in Example 1. Examples 34-39 differ from Example 1 in that ammonium glyphosate is replaced with glyphosate acid; the wetting dispersing agent and emulsifying agent are different, components in Examples 34-39 further include a stabilizer, sodium polyphosphate. See details in Table 6.

**Table 6**

| | Wetting dispersing agent | Emulsifying agent | Stabilizer | Conclusion | |
|---|---|---|---|---|---|
| | | | | Benzylazole Thermal storage Decomposition rate % | Phenomenon |
| Example 34 | SP-OF3498D: 3 parts by weight | 3441L: 12 parts by weight | Sodium polyphosphate: 1 part by weight | 16.33 | A small amount of solids sink to the bottom |
| Example 35 | SP-OF3498D: 3 parts by weight | 3441L: 12 parts by weight | Sodium polyphosphate: 2 parts by weight | 6.73 | Solids sink to the bottom |
| Example 36 | SP-OF3498D: 3 parts by weight | 3441L: 12 parts by weight | Sodium polyphosphate: 3 parts by weight | 9.65 | Solids sink to the bottom |
| Example 37 | SP-OF3498D: 3 parts by weight | 3441L: 12 parts by weight | Sodium tripolyphosphate: 1 part by weight | 8.56 | A small amount of solids sink to the bottom |
| Example 38 | SP-OF3498D: 3 parts by weight | 3441L: 12 parts by weight | Sodium tripolyphosphate: 2 parts by weight | 10.48 | Solids are aggregated at the bottom |
| Example 39 | SP-OF3498D: 3 parts by weight | 3441L: 12 parts by weight | Sodium tripolyphosphate: 3 parts by weight | 10.09 | Solids are aggregated at the bottom |

## Claims

1. A dispersible oil suspension agent containing benzylazole, comprising the following components in part by weight: 22-44 parts of ammonium glyphosate, 0.5-1.5 parts of benzylazole, 3-8 parts of wetting dispersing agent, 10-15 parts of emulsifying agent, 1-2 parts of structure regulating agent, and a solvent supplemented to 100 parts.

2. The dispersible oil suspension agent containing benzylazole according to claim 1, wherein a weight ratio of the ammonium glyphosate to benzylazole is (28-38): 1.

3. The dispersible oil suspension agent containing benzylazole according to claim 2, wherein the wetting dispersing agent is one or more of sulfonate, polycarboxylate and sulfate dispersing agents, preferably, the wetting dispersing agent is selected from one or more of TSC-930, SP-OF3498D, GY-EM05 and WELOD 461.

4. The dispersible oil suspension agent containing benzylazole according to claim 3, wherein the emulsifying agent is selected from one or more of OD21, ODE286 and TSC901.

5. The dispersible oil suspension agent containing benzylazole according to claim 4, wherein a weight ratio of the wetting dispersing agent to the emulsifying agent is 5: (11-14).

6. The dispersible oil suspension agent containing benzylazole according to any one of claims 1-5, wherein the structure regulating agent is white carbon black and/or organobentonite.

7. The dispersible oil suspension agent containing benzylazole according to claim 6, wherein the structure regulating agent is a mixture of white carbon black and organobentonite according to a weight ratio of (1-3):1.

8. The dispersible oil suspension agent containing benzylazole according to claim 7, wherein the dispersible oil suspension further comprises 5-10 parts by weight of synergist.

9. A method for preparing the dispersible oil suspension agent containing benzylazole according to any one of claims 1-7, comprising: mixing benzylazole with the wetting dispersing agent, the emulsifying agent, the structure regulating agent, the solvent and the ammonium glyphosate, and performing milling thereon.

10. The method for preparing the dispersible oil suspension agent containing benzylazole according to claim 9, comprising: mixing benzylazole with the wetting dispersing agent, the emulsifying agent, the structure regulating agent and the solvent to form an oil phase, adding the oil phase to a sand mill for circulation, and adding the ammonium glyphosate for milling after the circulation of the oil phase.
